# EUROPÄISCHE PATENTSCHRIFT

(11) **EP 2 488 535 B1**
(45) Veröffentlichungstag und Bekanntmachung des Hinweises auf die Patenterteilung: **16.07.2014**
(21) Anmeldenummer: 10763185.5
(22) Anmeldetag: 06.10.2010
(51) Int. Cl.: C07F 7/21, C07F 7/08

(54) **VERFAHREN ZUR HERSTELLUNG VON ORGANOOLIGOSILSESQUIOXANEN**
PREPAPRATION OF ORGANOOLIGOSILSESQUIOXANES
PROCEDE DE LA PRARATION DU COMPOSEES DES ORGANOOLIGOSILSESQUIOXANES

(30) Priorität: 14.10.2009 DE 102009045669
(43) Veröffentlichungstag der Anmeldung: 22.08.2012
(73) Patentinhaber: Wacker Chemie AG, 81737 München (DE)
(72) Erfinder: LÖSSEL, Georg, 84547 Emmerting (DE); MEISENBERGER, Manfred, 84489 Burghausen (DE)
(74) Vertreter: Fritz, Helmut
(86) Internationale Anmeldenummer: PCT/EP2010/064924
(87) Internationale Veröffentlichungsnummer: WO 2011/045218

(56) Entgegenhaltungen:
- EP-A1- 0 446 912
- US-A1- 2005 142 054

## Beschreibung

Die Erfindung betrifft ein Verfahren zur Herstellung von Organooligosilsesquioxanen aus Silicaten und Disiloxanverbindungen.

Organooligosilsesquioxane können als Vernetzungsmittel für Silicone und organische Polymere eingesetzt werden.

In DE 38 37 397 A1 und auch DE 101 56 619 A1 werden Organooligosilsesquioxane und Verfahren zu deren Herstellung offenbart. Dabei zeigt sich, dass in DE 38 37 397 A1 die Herstellung solcher Organooligosilsesquioxane vorzugsweise durch die Reaktion mit einem Reaktanden als Lösemittel für das Reaktionsprodukt im Überschuss beschrieben wird.

Weiter beschreiben die in DE 38 37 397 angeführten Beispiele 8 und 9 ein Herstellverfahren welches mit Beginn der Silikatherstellung bis zum Erhalt des reinen Reaktionsproduktes produktionstechnisch einen 6-Stufenprozess darstellt:
1. Stufe: Herstellung der Silikatbasis durch Umsetzung gefällter Kieselsäure mit wässriger Tetramethylammoniumhydroxidlösung.
2. Stufe: Einengen des Reaktionsgemisches und Auskristallisation des Produktes Tetramethylammoniumsilikat bei 4°C.
3. Stufe: Reaktion von Tetramethylammoniumsilikat mit einem im Überschuss eingesetzten und als Lösemittel für das Organooligosilsesquioxan fungierenden Reaktanden.
4. Phasentrennung und Waschen der organischen Phase zur Neutralität.
5. Eindampfen des gewaschenen, neutralen Reaktionsgemisches zur Trockene.
6. Umkristallisieren des Rückstandes aus einem Alkohol.

Somit beschreibt die DE 38 37 397 A1 ein Herstellverfahren mit unumgänglich hohem Kostenaufwand und relativ schlechten Ausbeuten (von 60-70 %) um hochreine Organooligosilsesquioxane herzustellen.

Gegenstand der Erfindung ist ein Verfahren zur Herstellung von Organooligosilsesquioxanen der allgemeinen Formel (I)

[RSiO_{3/2}]_{z} (I)

in der
**R** Reste der allgemeinen Formel (II)

-O-SiR¹₂Y (II),

bedeutet,
durch Umsetzung von 100 Mol Silicaten der allgemeinen Formel (III)

(W₄NOSiO_{3/2})_{z} (III),

mit höchstens 1,3 x 50 x **z** Mol Disiloxanverbindungen der allgemeinen Formel (IV),

R¹₂YSi-O-SiR¹₂Y (IV),

wobei
- **R¹**: einen zweiwertigen C₁- bis C₆-Kohlenwasserstoff- oder C₁-bis C₆-Alkoxyrest-,
- **Y**: ein Wasserstoffatom oder ein halogensubstituierter oder nicht halogensubstituierter C₁- bis C₁₀-Kohlenwasserstoffrest,
- **w**: einen C₁- bis C₄-Alkylrest und
- **z**: die Zahl 6, 8 oder 10 bedeuten,
in Gegenwart eines Fällungsmittels, welches bei Reaktionstemperatur flüssig ist und in welchem bei Reaktionstemperatur höchstens 1 g Organooligosilsesquioxane der allgemeinen Formel (I) in 100 ml Fällungsmittel löslich sind.

Das erfindungsgemässe Herstellverfahren für Organooligosilsesquioxane der allgemeinen Formel (I) ist eine Fällungsreaktion, bei der keiner der Reaktanden als Lösungsmittel für das entstandene Organooligosilsesquioxan der allgemeinen Formel (I) fungiert. Deshalb kristallisiert das Produkt der allgemeinen Formel (I) im Reaktionsmedium direkt nach der Umsetzung mit hoher Reinheit von 95 -100 %, insbesondere von 99-100%, gemessen über ¹H-NMR, aus. Organooligosilsesquioxane der allgemeinen Formel (I) fallen vorzugsweise als farblose Pulver an. Hohe Ausbeuten von mindestens 70%, bezogen auf eingesetzte Silicate der allgemeinen Formel (III) sind erreichbar.

Das Verfahren ist einfach und kostengünstig. Bei dem erfindungsgemäßen Verfahren fallen technisch aufwändige Prozesschritte, wie Phasentrennung, Waschen, Trocknen, Umkristallisation, wie im Stand der Technik beschrieben, weg.

Der erfindungsgemäße Herstellprozess kann als Batchansatz, als Semi-Batch und oder als kontinuierlicher Prozess geführt werden.

**R** kann durch die Wahl gleicher oder verschiedener, symmetrischer oder unsymmetrischer Disiloxanverbindungen der allgemeinen Formel (IV) gleiche oder verschiedene Reste bedeuten. Besonders bevorzugte Reste **R** sind -0-Si(CH₃)₂H oder -0-Si(CH₃)₂H₃C₂.

**R¹** bedeutet vorzugsweise einen Methyl-, Ethyl-, oder Phenylrest oder einen Methoxy-, Ethoxy- oder Propoxyrest.

**Y** bedeutet vorzugsweise einen Methylrest, Phenylrest oder einen C₂- bis C₁₀-Alkenylrest, der vorzugsweise nur eine Doppelbindung aufweist, insbesondere eine Vinyl- oder Allylgruppe. Weitere bevorzugte Reste **Y** sind C₁- bis C₁₀-Alkylreste, die ein Halogenatom, wie Chlor oder Brom am enständigen Kohlenstoffatom aufweisen, insbesondere 3-Chlorpropyl-, 3-Brompropyl-, 6-Chlorhexyl.

**W** bedeutet vorzugsweise einen Methyl-, Ethyl- oder n-Propylrest.

Vorzugsweise werden auf 100 Molteile Silicate der allgemeinen Formel (III) höchstens 1,2 x 50 x **z** Molteile, besonders bevorzugt höchstens 1,1 x 50 x **z** Molteile, insbesondere bevorzugt höchstens 1,05 x 50 x **z** Molteile Disiloxanverbindungen der allgemeinen Formel (IV) eingesetzt. Vorzugsweise werden auf 100 Molteile Silicate der allgemeinen Formel (III) mindestens 0,3 x 50 x **z** Molteile, besonders bevorzugt mindestens 0,8 x 50 x **z** Molteile, insbesondere bevorzugt mindestens 0,95 x 50 x **z** Molteile Disiloxanverbindungen der allgemeinen Formel (IV) eingesetzt.

Vorzugsweise beträgt die Reaktionstemperatur mindestens 0°C, insbesondere mindestens 20°C und vorzugsweise höchstens 100°C, besonders bevorzugt höchstens 60°C, insbesondere höchstens 40°C.

Vorzugsweise wird die Reaktion bei Druck der umgebenden Atmosphäre, also etwa 0,1 MPa (abs.)ausgeführt; sie kann auch bei höheren oder niedrigeren Drückern durchgeführt werden. Bevorzugt sind Drücke von mindestens 0,08 MPa (abs,) und besonders bevorzugt mindestens 0,09 MPa (abs.), besonders bevorzugt höchstens 0,2 MPa (abs.), insbesondere höchstens 0,15 Mpa (abs.).

Die Fällungsmittel sind bei Reaktionstemperatur, insbesondere bei 25°c und 0,1 MPa flüssig. Das Fällungsmittel dient auch als Verdünnungsmittel bei der Reaktion. Als Fällungsmittel sind Lösungsmittel oder Lösungsmittelgemische mit einem Siedepunkt bzw. Siedebereich von bis zu 120°C bei 0,1 MPa bevorzugt. Bevorzugte Fällungsmittel, sind polare Lösungsmittel, wie Wasser; Alkohole, wie Methanol, Methanol, n-Propanol, iso-Propanol oder Butanol; Ether, wie Dioxan, Tetrahydrofuran, Diethylether, Diethylenglycoldimethylether; chlorierte Kohlenwasserstoffe, wie Dichlormethan, Trichlormethan, 1,2-Dichlorethan, Trichlorethylen; Ketone, wie Aceton; Lactone wie 4-Butyrolacton; Nitrile wie Acetonitril; Nitroverbindungen wie Nitromethan; tertiäre Carbonsäureamide wie Dimethylformamid; Harnstoffderivate wie Tetramethylharnstoff oder Dimethylpropylenharnstoff (DMPU) ; Sulfoxide wie Dimethylsulfoxid (DMSO); Sulfone wie Sulfolan; Kohlensäureester wie Dimethylcarbonat oder Ethylencarbonat; Schwefelkohlenstoff und Nitrobenzol; primäre und sekundäre Amine, wie Diethylamin; Carbonsäuren, wie Ameisensäure oder Essigeäure) ; primäre und sekundäre Amide wie Formamid; Mineralsäuren, wie Schwefelsäure, Salpetersäure, Phosphorsäure, Salzsäure, Borsäure; oder Gemische dieser Lösungsmittel.

Das erfindungsgemäße Verfahren wird vorzugsweise in einem polaren protischen Lösungsmittel durchgeführt. Bevorzugt sind dabei Wasser und Alkohole.

Vorzugsweise sind in 100 ml Fällungsmittel bei Reaktionstemperatur höchstens 0,5 g, insbesondere höchstens 0,1 g Organooligosilsesquioxane der allgemeinen Formel (I) löslich.

Das erfindungsgemässe Verfahren wird vorzugsweise in Gegenwart eines sauren Katalysators durchgeführt. Der Katalysator und seine Einsatzmengen sind aus dem Stand der Technik bekannt. Bevorzugt werden pro 100 Mol Silicate der allgemeinen Formel (III) mindestens 0,01 Mol, besonders bevorzugt mindestens 0,1 Mol, insbesondere mindestens 0,5 Mol, insbesondere bevorzugt mindestens 5 Mol Katalysator und höchstens 200 Mol, besonders bevorzugt höchstens 100 Mol, insbesondere höchstens 50 Mol Katalysator eingesetzt.

Beispiele für solche sauren Katalysatoren sind Säuren, insbesondere Lewis-Säuren, wie BF₃, AlCl₃, TiCl₄, SnCl₄, SO₃, PCl₅, POCl₃, FeCl₃ und dessen Hydrate, ZnCl₂ und Phosphornitridchloride; Brönstedt-Säuren, wie Salzsäure, Bromwasserstoffsäure, Schwefelsäure, Chlorsulfonsäure, Phosphorsäuren, wie ortho-, meta- und Polyphosphorsäuren, Borsäure, selenige Säure, Salpetersäure, Essigsäure, Propionsäure, Halogenessigsäuren, wie Trichlor- und Trifluoressigsäure, Oxalsäure, p-Toluolsulfonsäure, saure Ionenaustauscher, saure Zeolithe, säureaktivierte Bleicherde, säureaktivierter Russ, Fluorwasserstoff, Chlorwasserstoff und dergleichen mehr. Besonders bevorzugt ist Salzsäure.

Die Herstellung von Silicaten der allgemeinen Formel (III) ist im Stand der Technik bekannt und beispielsweise von D. Hoebbel und W. Wieker (Zeitschrift für anorganische und allgemeine Chemie 384, Seite 43-52 (1971)) und I. Hasegawa und S. Sakka (Journal of Molecular Liquids 34, Seite 307-315 (1987)) beschrieben. Die Darstellung gelingt beispielsweise durch Hydrolyse von Tetraethylsilicat in wässrigem Methanol in Gegenwart von Tetraalkylammoniumhydroxiden, wobei durch geeignete Wahl des Tetraalkylammoniumhydroxids und der Gewichtsverhältnisse der Reaktanden selektiv Moleküle der Formel (III) dargestellt werden können, für die z 6, 8 oder 10 bedeutet.

In einer bevorzugten Ausführungsform werden in einem ersten Schritt die Silicate der allgemeinen Formel (III) in einer Lösung von W₄N⁺ OH- im Fällungsmittel, insbesondere Wasser, Methanol oder deren Gemischen, mit Tetraalkoxysilanen, deren Alkoxyreste 1 bis 6, insbesondere 1, 2 oder 3 Kohlenstoffatome aufweisen, hergestellt. Die so hergestellte Mischung kann dann direkt im erfindungsgemässen Verfahren als Rohprodukt eingesetzt werden.

Dies ist eine grosse Vereinfachung des Verfahrens, da die Silicate der allgemeinen Formel (III) ohne vorherige Aufreinigung durch Umkristallisation eingesetzt werden können.

In einer weiteren bevorzugten Ausführungsform wird das bei der Reaktion ebenfalls entstehende Salz aus Tetraalkylammoniumkation und Anion des Katalysators W₄N⁺ A⁻, insbesondere Tetramethylammoniumchlorid, abgetrennt und mit Alkali- oder Erdalkalihydroxid, vorzugsweise mit alkoholischer, beispielsweise methanolischer, KOH-Lösung zu W₄N⁺ OH⁻, insbesondere Tetraalkylammoniumhydroxid regeneriert. Das W₄N⁺ OH⁻ kann dann für die Herstellung von Silicaten der allgemeinen Formel (III) erneut verwendet werden.

Die nach dem erfindungsgemässen Verfahren herstellbaren Organooligosilsesquioxane der allgemeinen Formel (I) können als Vernetzungsmittel für Polymere verwendet werden, insbesondere für Silicone.

Alle vorstehenden Symbole der vorstehenden Formeln weisen ihre Bedeutungen jeweils unabhängig voneinander auf. In allen Formeln ist das Siliciumatom vierwertig.

Alle vorstehend aufgeführten Reaktionsteilnehmer und Hilfschemikalien können einzeln oder im Gemisch eingesetzt werden.

### Beispiele

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20 °C.

### Beispiel 1 (entspricht Beispiel 8 aus DE 38 37 397 A1, nicht erfindungsgemäß): Synthese von Octa(vinyldimethylsiloxy)octasilsesquioxan [(H₂C=CH)(CH₃)₂SᵢOSiI_{3/2}]₈

a) 82,2 g gefällte Kieselsäure wurden mit 1250 ml 10%iger wässriger Tetramethylammoniumhydroxidlösung (TMAOH) versetzt. Nach Rühren des Gemischs 16 h lang bei 25°C und 8 h bei 50°C erhielt man eine klare Lösung. Die Lösung wurde bis auf zwei Drittel ihres Ausgangsvolumens eingeengt und das enthaltene Tetramethylammoniumsilikat bei 4°C zur Kristallisation gebracht. Man erhielt 359,5 g noch wasserhaltiges Tetramethylammoniumsilikat.
b) 160 g dieses Tetramethylammoniumsilikats wurden portionsweise zu einem gut gerührten Gemisch aus 450 ml H₂O, 1000 ml Isopropanol, 1700 ml (1387 g) 1,3-Divinyl- 1,1,3,3-tetramethyldisiloxan (erhältlich als Wacker Siloxan VSi2 bei der Wacker Chemie AG, München, Deutschland) und 550 ml konzentrierter Salzsäure gegeben und anschließend das Reaktionsgemisch 7 Tage bei Raumtemperatur gerührt. Dann wurden die Phasen getrennt, die organische Phase mit Wasser neutral gewaschen, über Natriumsulfat getrocknet und vollständig eingedampft. Der Rückstand wurde aus Ethanol umkristallisiert. Man erhielt 64 g einer kristallinen Substanz (69% der Theorie, bezogen auf die eingesetzte Kieselsäure), die nach dampfdruckosmometrischen Messungen eine Molmasse von 1120 g mol⁻¹ aufweist. Das Gelpermeationschromatographie (GPC)-Diagramm zeigt eine einheitliche Verbindung an. Die ¹H-, ²⁹Si-NMR- und IR-Daten stehen mit der Struktur von Octa(vinyldimethylsiloxy)octasilsesquioxan in Einklang.

### Beispiel 2 (entspricht Beispiel 9 aus DE 38 37 397 A1, nicht erfindungsgemäß) :

### Synthese von Octa(dimethylsiloxy)octasilsesquioxan [H(CH₃)₂SiOSi_{3/2}]₈

### 160 g des gemäß Beispiel 1a) hergestellten

Tetramethylammoniumsilikats wurden portionsweise zu einem gut gerührten Gemisch aus 400 ml H₂O, 1000 ml Isopropanol, 1500 ml (1136 g) 1,1,2,2-Tetramethyldisiloxan (erhältlich als Wacker Siloxan HSi2 bei der Wacker Chemie AG, München, Deutschland) und 200 ml 10%iger Salzsäure gegeben und anschließend das Reaktionsgemisch 4 Stunden bei Raumtemperatur gerührt.

Die weitere Aufarbeitung erfolgte wie in Beispiel 1b) beschrieben. Das erhaltene Silylierungsprodukt wurde aus Aceton umkristallisiert.

Man erhielt 52,0 g einer kristallinen Substanz (67% der Theorie, bezogen auf die eingesetzte Kieselsäure), die nach dampfdruckosmometrischen Messungen eine Molmasse von 1150 g mol⁻¹ aufwies. Das GPC-Diagramm zeigte eine einheitliche Verbindung an, Die ¹H-, ²⁹Si-NMR- und IR-Daten stehen mit der Struktur von Octa(dimethylsiloxy)octasilsesquioxan in Einklang. Aktiver Wasserstoffgehalt; Theorie: 0,79 Gew.-%, gef.: 0,75 Gew.-%.

### Beispiel 3 (erfindungsgemäß) : Synthese von Octa (vinyldimethylsiloxy)octasilsesquioxan [(H₂C=CH) (CH₃)₂SiOSiO_{3/2}]₈

### a) Herstellung der Silikatbasis:

151 g einer 25%igen wässrigen TMAOH Lösung wurden zusammen mit 226 g Methanol in einem 2-Liter Dreihalskolben, ausgerüstet mit Tropftrichter und Rückflusskühler sowie Magnetrührer vorgelegt. Dazu wurden unter ständigem Rühren 85, 36 g Tetraethoxysilan (erhältlich als TES 28' bei Wacker Chemie AG, München, Deutschland) über einen Zeitraum von 75 Minuten zugegeben. Nach einer Nachrührzeit von 2-4 h konnte dieses das Tetramethylammoniumsilikat enthaltende Reaktionsgemisch für den nächste Prozessschritt, die Silylierung, als solches eingesetzt werden.

### b) Silylierung (Fällungsreaktion)

In einem 4 Liter Dreihalsglaskolben, ausgerüstet mit Tropftrichter und Rückflusskühler sowie Magnetrührer, wurden 100 g 1,3-Divinyl-1,1,3,3--tetramethyldisiloxan (erhältlich als Wacker Siloxan VSi2 bei der Wacker Chemie AG, München, Deutschland), 390,5 g Isopropylalkohol, 150g HCl (20 %ig) und 50 g H₂O (vollentsalztes Wasser) vorgelegt.

Unter ständigem Rühren wurde die unter a) beschriebene Tetramethylammoniumsilikat enthaltende Mischung innerhalb von 80-100 Minuten zur Vorlage gegeben.

Nach einer Nachrührzeit von 2-4 h hatte sich das entstehende Produkt am Glasboden abgesetzt und wurde mittels Saugnutsche von der flüssigen Phase getrennt.

Das so abgetrennte, kristalline Produkt wurde mit vollentsalztem Wasser (ca. 100g) gewaschen und im Trockenschrank bei 100°C. getrocknet.

Man erhielt so 42,4 g einer kristallinen Substanz (= 71% Ausbeute bezogen auf die eingesetzte Kieselsäure).

Mittels GPC wurde eine einheitliche Molmasse von 1171,7 g/mol gemessen, wobei Mₙ und M_{w} gleich sind und somit die Polydispersität der erhaltenen Verbindung bei 1,0 liegt.

¹H- und ²⁹Si-NMR-Daten stehen mit der Struktur von Octa(vinyldimethylsiloxy)octasilsesquioxan im Einklang.

### Beispiel 4 (erfindungsgemäß): Synthese von

### Octa(dimethylsiloxy)octasilsesquioxan [H(CH₃)₂SiOSiO_{3/2}]₈

a) Die Silicatherstellung erfolgte wie in Beispiel 3 a).
b) Silylierung (Fällungsreaktion)

In einem 4 Liter Dreihalsglaskolben, ausgerüstet mit Tropftrichter und Rückflusskühler sowie Magnetrührer, wurden 60,5 g 1,1,3,3-tetramethyldisiloxan (erhältlich als Wacker Siloxan HSi2 bei der Wacker-Chemie AG, München, Deutschland), 390,5 g Isopropylalkohol, 150g HCl (20 %ig) und 100 g H₂O (vollentsalztes Wasser) vorgelegt.

Unter ständigem Rühren wurde die unter A beschriebene Tetramethylammoniumsilikat enthaltende Mischung innerhalb von 80-100 Minuten zur Vorlage gegeben.

Nach einer Nachrührzeit von 2-4 h hatte sich das entstehende Produkt am Glasboden abgesetzt und wurde mittels Saugnutsche von der flüssigen Phase getrennt.

Das so abgetrennte, kristalline Produkt wurde mit vollentsalztem Wasser (ca. 100g) gewaschen und im Trockenschrank bei 100°C. getrocknet.

Man erhielt so 45 g einer kristallinen Substanz (= 86,3% Ausbeute bezogen auf die eingesetzte Kieselsäure).

Mittels GPC wurde eine einheitliche Molmasse von 1032,29 g/mol gemessen, wobei Mₙ und M_{w} gleich sind und somit die Polydispersität der erhaltenen Verbindung bei 1,0 liegt.

¹H-und ²⁹Si-NMR -Daten stehen mit der Struktur von Octa(vinyldimethylsiloxy)octasilsesquioxan im Einklang. Zudem gleicht der Wert aktiver Wasserstoffgehalt 0,79 Gew.% gemäß der ¹H-NMR-Analyse dem theoretischen Wert (0,79 Gew.%).

## Patentansprüche

1. Verfahren zur Herstellung von Organooligosilsesquioxanen der allgemeinen Formel (I)
[RSiO_{3/2}]_{z} (I)
in der
R Reste der allgemeinen Formel (II)
-O-SiR¹₂Y (II),
bedeutet,
durch Umsetzung von 100 Mol Silicaten der allgemeinen Formel (III)
(W₄NOSiO_{3/2})_{z} (III),
mit höchstens 1,3 x 50 x z Mol Disiloxanverbindungen der allgemeinen Formel (IV),
R¹₂YSi-O-SiR¹₂Y (IV),
wobei
**R¹** einen zweiwertigen C₁- bis C₆-Kohlenwasserstoff- oder C₁-bis C₆-Alkoxyrest-,
**Y** ein Wasserstoffatom oder ein halogensubstituierter oder nicht halogensubstituierter C₁- bis C₁₀-Kohlenwasserstoffrest,
**W** einen C₁- bis C₄-Alkylrest und
**z** die Zahl 6, 8 oder 10 bedeuten,
in Gegenwart eines Fällungsmittels, welches bei bei 25°C und 0,1 Mpa flüssig ist und in welchem bei einer Reaktionstemperatur von 0°C bis 60 °C höchstens 1 g Organooligosilsesquioxane der allgemeinen Formel (I) in 100 ml Fällungsmittel löslich sind, wobei das entstandene Organooligosilsesquioxan der allgemeinen Formel (I) im Reaktionsmedium direkt nach der Unisetzung mit einer Reinheit von 95 -100 %, gemessen über 1H-NMR, auskristallisiert.

2. Verfahren nach Anspruch 1, bei dem R¹ ausgewählt wird aus Methyl-, Ethyl-, Phenyl-, Methoxy-, Ethoxy- und Propoxyrest.

3. Verfahren nach Anspruch 1 oder 2, bei dem Y ausgewählt wird aus Methylrest, Phenylrest, C₂- bis C₁₀-Alkenylrest und C₁-bis C₁₀-Alkylresten, die ein Halogenatom, am endständigen Kohlenstoffatom aufweisen.

4. Verfahren nach Anspruch 1 bis 3, bei dem W ausgewählt wird aus Methyl-, Ethyl- und n-Propylrest.

5. Verfahren nach Anspruch 1 bis 4, bei dem das Fällungsmittel polar ist und ausgewählt wird aus Wasser, Alkoholen, Ethern, chlorierten Kohlenwasserstoffen, Ketonen, Nitrilen, Nitroverbindungen, tertiären Carbonsäureamiden, Harnstoffderivaten, Sulfoxiden, Kohlensäureestern, Schwefelkohlenstoff, Carbonsäuren und Mineralsäuren, und deren Gemischen.

6. Verfahren nach Anspruch 1 bis 5, bei dem in einem ersten Schritt die Silicate der allgemeinen Formel (III) in einer Lösung von W₄N⁺ OH⁻ im Fällungsmittel, mit Tetraalkoxysilanen, deren Alkoxyreste 1 bis 6 Kohlenstoffatome aufweisen, hergestellt werden und die so hergestellte Mischung dann direkt im Verfahren gemäss Anspruch 1 als Rohprodukt eingesetzt wird.

## Claims

1. Method for producing organooligosilsesquioxanes of general formula (I)
[RSiO_{3/2}]_{z} (I)
where
**R** represents moieties of general formula (II)
-O-SiR¹₂Y (II),
by reaction of 100 mol of silicates of general formula (III)
(W₄NOSiO_{3/2})_{z} (III),
with not more than 1.3 x 50 x z mol of disiloxane compounds of general formula (IV),
R¹₂YSi-O-SiR¹₂Y (IV),
where
**R¹** represents a divalent C₁- to C₆-hydrocarbon or C₁-to C₆-alkoxy moiety,
**Y** represents a hydrogen atom or a halogenated or nonhalogenated C₁- to C₁₀-hydrocarbon moiety,
**W** represents a C₁- to C₄-alkyl moiety, and
**z** represents the number 6, 8 or 10,
in the presence of a precipitant which is liquid at 25°C and 0.1 Mpa and in which at a reaction temperature of 0°C to 60°C at most 1 g of organooligosilsesquioxanes of general formula (I) is soluble in 100 ml of precipitant, wherein the resultant organooligosilsesquioxane of general formula (I) crystallizes out in the reaction medium at a purity of 95-100%, measured via 1H NMR, directly after the reaction.

2. Method according to Claim 1 wherein **R¹** is selected from methyl, ethyl, phenyl, methoxy, ethoxy and propoxy.

3. Method according to Claim 1 or 2 wherein **Y** is selected from methyl, phenyl, C₂- to C₁₀-alkenyl and C₁-to C₁₀-alkyl moieties that have a halogen atom on the terminal carbon atom.

4. Method according to Claims 1 to 3 wherein **W** is selected from methyl, ethyl and n-propyl.

5. Method according to Claims 1 to 4 wherein the precipitant is polar and is selected from water, alcohols, ethers, chlorinated hydrocarbons, ketones, nitriles, nitro compounds, tertiary carboxamides, urea derivatives, sulfoxides, carbonic esters, carbon sulfide, carboxylic acids and mineral acids, and mixtures thereof.

6. Method according to Claims 1 to 5 wherein, in a first step, the silicates of general formula (III) are produced in a solution of W₄N⁺ OH⁻ in the precipitant, with tetraalkoxysilanes where the alkoxy moieties have 1 to 6 carbon atoms, and the mixture thus produced is then used directly as crude product in the method according to Claim 1.

## Revendications

1. Procédé pour la préparation d'organo-oligosilsesquioxanes de formule générale (I)
[RSiO_{3/2}]_{z} (I)
dans laquelle
R représente des radicaux de formule générale (II)
-O-SiR¹₂Y (II),
par mise en réaction de 100 moles de silicates de formule générale (III)
(W₄NOSiO_{3/2})_{z} (III),
avec au maximum 1,3 x 50 x z moles de composés disiloxane de formule générale (IV),
R¹₂YSi-O-SiR¹₂Y (IV),
dans laquelle
R¹ représente un radical hydrocarboné en C₁-C₆ ou alcoxy en C₁-C₆ divalent,
Y représente un atome d'hydrogène ou un radical hydrocarboné en C₁-C₁₀ substitué par halogéno ou non substitué par halogéno,
W représente un radical alkyle en C₁-C₄ et
z représente le nombre 6, 8 ou 10,
en présence d'un agent de précipitation, qui est liquide à 25 °C et sous 0,1 MPa et dans lequel à une température de réaction de 0 °C à 60 °C au maximum 1 g d'organo-oligosilsesquioxane de formule générale (I) est soluble dans 100 ml d'agent de précipitation, l'organo-oligosilsesquioxane de formule générale (I) résultant étant séparé par cristallisation dans le milieu réactionnel directement après la réaction, en une pureté de 95 - 100 %, mesurée par RMN-¹H.

2. Procédé selon la revendication 1, dans lequel R¹ est choisi parmi les radicaux méthyle, éthyle, phényle, méthoxy, éthoxy et propoxy.

3. Procédé selon la revendication 1 ou 2, dans lequel Y est choisi parmi le radical méthyle, le radical phényle, un radical alcényle en C₂-C₁₀ et les radicaux alkyle en C₁-C₁₀ qui comportent un atome d'halogène sur l'atome de carbone en bout de chaîne.

4. Procédé selon l'une quelconque des revendications 1 à 3, dans lequel W est choisi parmi le radical méthyle, le radical éthyle et le radical n-propyle.

5. Procédé selon l'une quelconque des revendications 1 à 4, dans lequel l'agent de précipitation est polaire et est choisi parmi l'eau, des alcools, des éthers, des hydrocarbures chlorés, des cétones, des nitriles, des composés nitrés, des carboxamides tertiaires, des dérivés d'urée, des sulfoxydes, des esters d'acide carbonique, le sulfure de carbone, des acides carboxyliques et des acides minéraux, et des mélanges de ceux-ci.

6. Procédé selon l'une quelconque des revendications 1 à 5, dans lequel dans une première étape on prépare les silicates de formule générale (III) dans une solution de W₄N⁺ OH⁻ dans l'agent de précipitation, avec des tétraalcoxysilanes, dont les radicaux alcoxy comportent de 1 à 6 atomes de carbone, et ensuite le mélange ainsi préparé est utilisé directement en tant que produit brut dans le procédé selon la revendication 1.
